# FASCICULE DE BREVET EUROPEEN

(11) **EP 1 964 740 B1**
(45) Date de publication et mention de la délivrance du brevet: **20.01.2010**
(21) Numéro de dépôt: 08151754.2
(22) Date de dépôt: 21.02.2008
(51) Int. Cl.: B60T 13/52, B60T 13/24

(54) **Nouvelle architecture fonctionnelle d'un circuit de vide d'un véhicule automobile pour préserver l'intégrité des actionneurs ou récepteurs pneumatiques**
Neuartige funktionelle Architektur eines Vakuumkreislaufs in einem Kraftfahrzeug zur Erhaltung der Integrität der pneumatischen Stellglieder oder Aufnehmer
New functional architecture of an automobile vacuum circuit for preserving the integrity of the pneumatic actuators or receptors

(30) Priorité: 01.03.2007 FR 0753574
(43) Date de publication de la demande: 03.09.2008
(73) Titulaire: Peugeot Citroën Automobiles SA, 78140 Vélizy-Villacoublay (FR)
(72) Inventeur: Lesoudier, Gaël, 28230 Epernon (FR)
(74) Mandataire: Ménès, Catherine

(56) Documents cités:
- EP-A- 0 330 918
- DE-A1- 2 918 186
- DE-A1- 19 744 626
- US-B1- 6 220 271

## Description

La présente invention concerne une nouvelle architecture fonctionnelle de circuit de vide d'un véhicule automobile.

Elle s'applique d'une manière générale à l'utilisation sur des véhicules automobiles d'un générateur de vide en tant que source d'énergie pour commander un ou plusieurs récepteurs ou actionneurs pneumatiques reliés au générateur de vide et dont l'un d'entre eux peut être constitué par un amplificateur de freinage.

Le générateur de vide est soit une pompe à vide entraînée par un moteur électrique ou thermique du véhicule soit directement le moteur thermique de propulsion du véhicule, les phases de très faibles charges des moteurs thermiques à allumage commandé permettent une telle génération de vide.

Pour assurer la stabilité des prestations de chaque actionneur ou récepteur pneumatique, l'environnement de celui-ci doit impérativement être préservé de toute pollution, notamment de l'huile, en provenance du générateur de vide. Cette condition est valable pour toutes les situations de vie du véhicule équipé d'un circuit de vide entre le générateur et l'actionneur ou récepteur.

Ainsi, lors du fonctionnement du générateur de vide, le débit d'air généré balaie le circuit de vide de l'actionneur ou récepteur vers le générateur de vide, de sorte qu'il n'y a aucun risque de polluer, notamment en huile, l'actionneur ou récepteur. Par contre, en l'absence de débit d'air lors d'une phase d'arrêt du générateur de vide, le récepteur ou actionneur devient alors vulnérable à des mouvements de polluants, notamment de l'huile, issus de l'environnement du générateur de vide.

Cette situation se comprend mieux en référence à un amplificateur de freinage utilisé dans un dispositif de freinage assisté pour amplifier l'effort de freinage exercé par le conducteur du véhicule sur une pédale de frein de ce véhicule. Un tel amplificateur de freinage comprend un boîtier renfermant une membrane séparant le boîtier en deux chambres respectivement de basse pression et de haute pression contenant toutes les deux de l'air.

Selon ce dispositif, la chambre de basse pression de l'amplificateur de freinage est reliée à la pompe à vide constituant le générateur de vide par une conduite et cette pompe à vide fonctionne de façon permanente afin que l'assistance au freinage soit disponible continuellement.

Une telle pompe à vide est en service dès que le moteur thermique du véhicule fonctionne et elle s'arrête dès que le moteur thermique est éteint.

Une pompe à vide ne peut être garantie étanche par construction, de sorte qu'après arrêt du moteur thermique, la pression atmosphérique s'établit dans le carter de la pompe à vide et augmente alors progressivement jusqu'à la pression atmosphérique alors que la chambre basse pression de l'amplificateur de freinage est à une pression très inférieure à la pression atmosphérique. Une telle situation provoque une circulation d'air dans la conduite reliant la pompe à vide à l'amplificateur de freinage dans le sens de la pompe à vide vers l'amplificateur de freinage, de sorte que de l'huile de lubrification présente dans la pompe à vide transite vers l'amplificateur de freinage en étant aspirée par la chambre à basse pression de celui-ci. Dans ces conditions, l'amplificateur de freinage va se détériorer très rapidement, engendrant alors une perte d'assistance de freinage préjudiciable à la sécurité du conducteur du véhicule.

Pour remédier à cet inconvénient, on utilise au moins un clapet anti-retour implanté sur le circuit de vide afin d'isoler la pompe à vide constituant le générateur de vide, de l'amplificateur de freinage constituant le récepteur, lorsque la pompe à vide est à l'arrêt, comme décrit, par exemple, dans la demande de brevet européen 1 681 219. Cependant, cette solution, compte tenu de l'architecture retenue du circuit de vide et la recherche de performance pour la génération de vide, ne permet pas de garantir le niveau d'étanchéité attendu dans toutes les conditions de vie du véhicule, notamment pour une faible variation de pression de part et d'autre du clapet anti-retour.

Une solution supplémentaire pour résoudre le problème de pollution sus-mentionné est de développer des récepteurs résistants à l'huile, mais cette solution est extrêmement coûteuse pour les véhicules automobiles de grande série.

La présente invention a pour but de remédier aux inconvénients ci-dessus des solutions connues.

On connait de DE19744626-A, un système formant circuit de vide d'un véhicule, comprenant un générateur de vide et au moins un récepteur pneumatique relié au générateur de vide par une conduite primaire, et qui est caractérisé en ce que la conduite primaire est reliée à des moyens permettant d'amener à la pression atmosphérique la conduite primaire lorsque le générateur de vide est à l'arrêt.

Selon l'invention, le système comprend de plus un second récepteur ou actionneur pneumatique relié à la conduite primaire par une conduite secondaire et pouvant être piloté par une électrovanne disposée dans la conduite secondaire pour assurer le fonctionnement normal du second récepteur ou actionneur pneumatique lors du fonctionnement du générateur de vide, les moyens de mise à la pression atmosphérique sont constitués par l'électrovanne qui est pilotée pendant une durée déterminée, à l'arrêt du générateur de vide, de manière à mettre à la pression atmosphérique la conduite primaire au travers du second récepteur.

Selon un premier mode de réalisation, les moyens de mise à la pression atmosphérique comprennent une conduite secondaire raccordée à la conduite primaire et débouchant à l'atmosphère à l'opposé de la conduite primaire au travers d'un filtre à air.

Ces moyens de mise à la pression atmosphérique comprennent en outre un ajutage disposé dans la conduite secondaire, permettant de réguler le temps de mise à la pression atmosphérique de la conduite primaire à l'arrêt du générateur de vide et autorisant un débit d'air passant dans la conduite secondaire beaucoup plus faible que le débit d'air passant dans la conduite primaire de façon à ne pas perturber le fonctionnement du générateur de vide.

Avantageusement, le filtre à air est celui du moteur thermique du véhicule.

De préférence, le générateur de vide est une pompe à vide et le récepteur est un amplificateur de freinage dont la chambre à basse pression d'air est reliée à la pompe à vide par la conduite primaire.

L'invention vise également un véhicule automobile, caractérisé en ce qu'il est équipé d'un système formant circuit de vide tel que défini précédemment.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :
- la figure 1 représente une nouvelle architecture de circuit de vide d'un véhicule automobile, pourvu d'une mise à l'air atmosphérique de ce circuit suivant un premier mode de réalisation de l'invention ; et
- la figure 2 représente une nouvelle architecture de circuit de vide d'un véhicule automobile, pourvu d'une mise à l'air atmosphérique de ce circuit suivant un second mode de réalisation de l'invention.

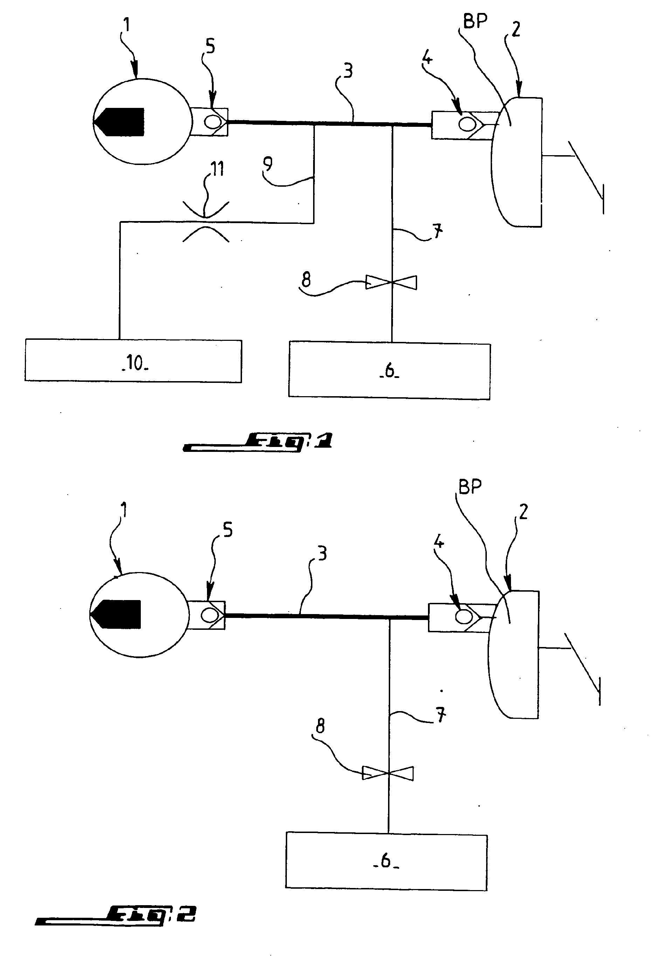

En se reportant à la figure 1, le nouveau système de circuit de vide d'un véhicule automobile comprend une pompe à vide 1 et un amplificateur de freinage 2 relié à la pompe 1 par l'intermédiaire d'une conduite primaire 3.

Comme cela est connu en soi, l'amplificateur de freinage 2 comprend notamment une chambre à basse pression BP reliée à la conduite 3 par l'intermédiaire d'un clapet anti-retour 4.

L'extrémité de la conduite 3 opposée à l'amplificateur de freinage 2 est raccordée à la pompe à vide 1 par l'intermédiaire d'un autre clapet anti-retour 5.

Lorsque la pompe à vide 1 fonctionne, une dépression se produit dans la conduite 3 de manière qu'un débit d'air circule dans cette conduite de l'amplificateur de freinage 2 vers la pompe 1 au travers des clapets 4, 5 de manière que la chambre de l'amplificateur soit maintenue à une basse pression d'air déterminée.

Un actionneur pneumatique 6 est relié à une conduite secondaire 7 raccordée à la conduite 3 en un point situé entre les deux clapets anti-retour 4, 5. L'actionneur pneumatique 6 est piloté par une électrovanne 8 disposée dans la conduite secondaire 7 pour assurer le fonctionnement de la pompe à vide 1. Ainsi, en fonctionnement, la pompe à vide 1 assure également une circulation de débit d'air de l'actionneur pneumatique 16 vers la pompe 1 au travers de la conduite secondaire 7 et de la conduite primaire 3.

Selon le premier mode de réalisation de l'invention, une autre conduite secondaire ou intermédiaire 9 est raccordée à la conduite primaire 3 en un point situé entre le clapet anti-retour 5 et le point de raccordement de la conduite secondaire 7 à la conduite 3.

L'extrémité de la conduite intermédiaire 9 opposée à la conduite 3 débouche à l'atmosphère au travers d'un filtre à air 10 qui, de préférence, est le filtre à air du moteur thermique de propulsion du véhicule automobile.

La conduite intermédiaire 9 comporte un ajutage 11, c'est-à-dire un orifice calibré de faible diamètre, par exemple de moins d'un millimètre. L'ajutage 11 introduit une perte de charge dans la conduite primaire 3 lors du fonctionnement de la pompe à vide 1, mais le débit d'air pouvant passer dans l'ajutage 11 au travers de la conduite 9 est beaucoup plus faible que le débit d'air pouvant passer dans la conduite 3 de manière à ne pas perturber le fonctionnement de cette pompe.

Ainsi, lors du fonctionnement de la pompe à vide 1, un débit d'air ou flux de masse d'air provient d'une part de l'amplificateur de freinage 2 vers la pompe 1 au travers de la conduite primaire 3 et d'autre part de l'actionneur pneumatique 6 au travers de la conduite 7 et de la conduite 3 vers la pompe 1 lorsque l'électrovanne 8 est pilotée pour assurer le fonctionnement de l'actionneur 6, et un débit d'air ou flux de masse d'air continu très faible provient également de la conduite intermédiaire 9 au travers du filtre à air 10 et de l'ajutage 11 à la pompe 1, le filtre 10 empêchant les impuretés de pénétrer dans la conduite 3 et les récepteurs pneumatiques 2, 6 conservent leur fonctionnalité malgré la très légère perte de débit provoquée par le circuit de mise à l'air 9, 11.

Lorsque la pompe à vide 1 est arrêtée après que l'utilisateur du véhicule a éteint le moteur thermique de celui-ci, il n'y a plus de débit d'air circulant dans la conduite primaire 3 en provenance de l'amplificateur de freinage 2, et, le cas échéant, de l'actionneur pneumatique 6, de sorte qu'il subsiste une dépression dans la conduite 3, mais du fait de la liaison de cette conduite à l'atmosphère par l'intermédiaire de la conduite 9 et de l'ajutage 11, il se produit un retour rapide de la conduite primaire 3 à la pression atmosphérique, vidangeant en quelque sorte le circuit de vide de toute source de dépression. Dans ces conditions, en l'absence totale de source de dépression dans le circuit de vide, il n'y a plus d'énergie susceptible d'initialiser ou d'entretenir une migration d'huile dans la conduite primaire 3 de la pompe à vide 1 vers l'amplificateur de freinage 2 et l'actionneur pneumatique 6, empêchant de la sorte l'huile d'être aspirée dans l'amplificateur de freinage 2 et l'actionneur pneumatique 6 notamment dans la situation suivant laquelle la pompe à huile 1 ne serait plus complètement étanche comme déjà expliqué précédemment.

La section ou diamètre de l'ajustage 11 est calculée pour satisfaire à un compromis entre le délai de vidange souhaité du circuit de vide en phase d'arrêt de la pompe à vide 1 et la perte de débit d'air par le circuit de mise à la pression atmosphérique 9, 11 lors du fonctionnement de la pompe à vide 1.

Le second mode de réalisation de l'invention tel que représenté en figure 2 comporte les mêmes éléments ou composants que celui de la figure 1, à part l'absence de la conduite 9, du filtre à air 10 et de l'ajutage 11 du premier mode de réalisation.

Ainsi, on retrouve en figure 2 la pompe à vide 1 raccordée à l'amplificateur de freinage 2 par l'intermédiaire de la conduite primaire 3 et les clapets anti-retour 4, 5 disposés aux extrémités de la conduite 3 à proximité respectivement de l'amplificateur de freinage 2 et de la pompe à vide 1. On retrouve également l'actionneur pneumatique 6 relié à la conduite secondaire 7 qui est raccordée à la conduite primaire 3 en un point situé entre les deux clapets anti-retour 4, 5, et l'électrovanne 8 disposée dans la conduite secondaire 7.

Dans ce mode de réalisation, l'électrovanne 8 peut être pilotée, lorsque la pompe à vide 1 est à l'arrêt, de manière à mettre à la pression atmosphérique la conduite primaire 3 au travers de la conduite secondaire 7 et de l'actionneur pneumatique 6. Lorsque la pompe à vide 1 fonctionne, un débit d'air ou flux de masse d'air provient de l'amplificateur de freinage 2 vers la pompe 1 au travers de la conduite primaire 3 et un débit d'air ou flux de masse d'air provient de l'actionneur 6 au travers de la conduite 7 et de la conduite primaire 3 vers la pompe 1, l'électrovanne 8 étant alors commandée pour assurer la circulation d'air vers la conduite 3.

Lorsque la pompe à vide 1 est arrêtée suite à l'arrêt du moteur thermique du véhicule, aucun débit d'air ne circule dans les conduites 3 et 7 et l'électrovanne 8 est pilotée de manière à permettre à l'actionneur pneumatique 6 d'effectuer la mise à la pression atmosphérique de la conduite 3 au travers de la conduite secondaire 7. Le temps d'actionnement de l'électrovanne 8 est calculé de manière à assurer la vidange totale des circuits primaire et secondaire de toute source de dépression.

Bien entendu, selon les premier et second modes de réalisation ci-dessus décrits, il est possible de raccorder à la conduite principale 3 d'autres récepteurs ou actionneurs pneumatiques.

Les moyens de mise à la pression atmosphérique du système de vide sont d'une simplicité et robustesse remarquables. Aucun élément mobile n'est ajouté à ce système qui intègre un élément de sécurité qu'est l'amplificateur de freinage.

Ces moyens de mise à la pression atmosphérique ne remettent pas en cause les architectures des systèmes formant circuit de vide des véhicules automobiles et de leurs matériaux associés, d'autant plus que ces nouveaux dispositifs autorisent une plus grande souplesse dans les choix d'architecture de circuits de vide d'air des véhicules. L'invention peut s'intégrer très facilement dans un système de vide déjà conçu et présent dans des véhicules.

## Revendications

1. Système formant circuit de vide d'un véhicule, comprenant un générateur de vide (1), au moins un premier récepteur pneumatique (2) relié au générateur de vide (1) par une conduite primaire (3) un second récepteur ou actionneur pneumatique (6) relié à la conduite primaire (3) par une conduite secondaire (7) et pouvant être piloté par une électrovanne (8) disposée dans la conduite secondaire (7) pour assurer le fonctionnement normal du second récepteur ou actionneur pneumatique (6) lors du fonctionnement du générateur de vide (1), **caractérisé en ce que** l'électrovanne (8) est pilotée pendant une durée déterminée, à l'arrêt du générateur de vide (1), de manière à mettre à la pression atmosphérique la conduite primaire (3) au travers du second récepteur (6).

2. Système selon la revendication 1, **caractérisé en ce que** les moyens de mise à la pression atmosphérique comprennent une conduite secondaire (9) raccordée à la conduite primaire (3) et débouchant à l'atmosphère à l'opposé de la conduite primaire (3) au travers d'un filtre à air (10).

3. Système selon la revendication 2, **caractérisé en ce que** les moyens de mise à la pression atmosphérique comprennent en outre un ajutage (11) disposé dans la conduite secondaire (9), permettant de réguler le temps de mise à la pression atmosphérique de la conduite primaire (3) à l'arrêt du générateur de vide (1) et autorisant un débit d'air passant dans la conduite secondaire (9) beaucoup plus faible que le débit d'air passant dans la conduite primaire (3) de façon à ne pas perturber le fonctionnement du générateur de vide (1).

4. Système selon la revendication 2 ou 3, **caractérisé en ce que** le filtre à air (10) est celui du moteur thermique du véhicule.

5. Système selon l'une des revendications précédentes, **caractérisé en ce que** le générateur de vide est une pompe à vide (1) et le premier récepteur est un amplificateur de freinage (2) dont la chambre à basse pression d'air est reliée à la pompe à vide (1) par la conduite primaire (3).

6. Véhicule automobile, **caractérisé en ce qu'**il est équipé d'un système formant circuit de vide tel que défini dans l'une quelconque des revendications précédentes.

## Claims

1. System forming a vacuum circuit of a vehicle, comprising a vacuum generator (1), at least one first pneumatic receiver (2) connected to the vacuum generator (1) via a primary duct (3), a second pneumatic receiver or actuator (6) connected to the primary duct (3) via a secondary duct (7) and being able to be controlled by a solenoid valve (8) placed in the secondary duct (7) in order to ensure the normal operation of the second pneumatic receiver or actuator (6) during the operation of the vacuum generator (1), **characterized in that** the solenoid valve (8) is controlled for a determined period, when the vacuum generator (1) stops, so as to place the primary duct (3) at atmospheric pressure through the second receiver (6).

2. System according to Claim 1, **characterized in that** the means for placing at atmospheric pressure comprise a secondary duct (9) connected to the primary duct (3) and opening into the atmosphere at the opposite end of the primary duct (3) through an air filter (10).

3. System according to Claim 2, **characterized in that** the means for placing at atmospheric pressure a nozzle (11) placed in the secondary duct (9) making it possible to regulate the time for placing the primary duct (3) at atmospheric pressure when the vacuum generator (1) stops and allowing to pass into the secondary duct (9) an air flow that is much weaker than the air flow passing into the primary duct (3) so as not to disrupt the operation of the vacuum generator (1).

4. System according to Claim 2 or 3, **characterized in that** the air filter (10) is that of the heat engine of the vehicle.

5. System according to one of the preceding claims, **characterized in that** the vacuum generator is a vacuum pump (1) and the first receiver is a brake booster (2) the low air pressure chamber of which is connected to the vacuum pump (1) via the primary duct (3).

6. Motor vehicle, **characterized in that** it is fitted with a system forming a vacuum circuit as defined in any one of the preceding claims.

## Patentansprüche

1. System, das einen Unterdruckkreis eines Fahrzeugs bildet, mit einem Unterdruckgenerator (1), wenigstens einem ersten Druckluftaufnehmer (2), der mit dem Unterdruckgenerator (1) durch eine Primärleitung (3) verbunden ist, einem zweiten Druckluftaufnehmer oder - aktor (6), der mit der Primärleitung (3) durch eine Sekundärleitung (7) verbunden ist und durch ein Schaltschütz (8), das in der Sekundärleitung (7) angeordnet ist, gesteuert werden kann, um die normale Funktion des zweiten Druckluftaufnehmers oder -aktors (6) während des Betriebs des Unterdruckgenerators (1) zu gewährleisten, **dadurch gekennzeichnet, dass** das Schaltschütz (8) während einer bestimmten Dauer bei Stillstand des Unterdruckgenerators (8) in der Weise gesteuert wird, dass die Primärleitung (3) über den zweiten Aufnehmer (6) auf Atmosphärendruck gebracht wird.

2. System nach Anspruch 1, **dadurch gekennzeichnet, dass** die Mittel zum Herstellen des Atmosphärendrucks eine Sekundärleitung (9) enthalten, die mit der Primärleitung (3) verbunden ist und entgegengesetzt zur Primärleitung (3) über einen Luftfilter (10) in die Atmosphäre mündet.

3. System nach Anspruch 2, **dadurch gekennzeichnet, dass** die Mittel zum Herstellen des Atmosphärendrucks außerdem eine Durchflussdüse (11) enthalten, die in der Sekundärleitung (9) angeordnet ist und die Einstellung der Zeit zum Herstellen des Atmosphärendrucks der Primärleitung (3) bei Stillstand des Unterdruckgenerators (1) ermöglicht und einen Luftdurchfluss in der Sekundärleitung (9) zulässt, der viel schwächer als der Luftdurchfluss in der Primärleitung (3) ist, derart, dass die Funktion des Unterdruckgenerators (1) nicht gestört wird.

4. System nach Anspruch 2 oder 3, **dadurch gekennzeichnet, dass** der Luftfilter (10) jener der Brennkraftmaschine des Fahrzeugs ist.

5. System nach einem der vorhergehenden Ansprüche, **dadurch gekennzeichnet, dass** der Unterdruckgenerator eine Unterdruckpumpe (1) ist und der erste Aufnehmer ein Bremskraftverstärker (2) ist, dessen Kammer mit niedrigem Luftdruck mit der Unterdruckpumpe (1) durch die Primärleitung verbunden ist.

6. Kraftfahrzeug, **dadurch gekennzeichnet, dass** es mit einem einen Unterdruckkreis bildenden System wie in einem der vorhergehenden Ansprüche definiert ausgerüstet ist.
